# EUROPÄISCHE PATENTSCHRIFT

(11) **EP 3 585 655 B1**
(45) Veröffentlichungstag und Bekanntmachung des Hinweises auf die Patenterteilung: **09.03.2022**
(21) Anmeldenummer: 18701152.3
(22) Anmeldetag: 19.01.2018
(51) Int. Cl.: B60R 16/023, G07C 5/08

(54) **VERFAHREN UND STEUERGERÄT ZUM SPEICHERN EINER FEHLERINFORMATION EINES FAHRZEUGS AUF ZUMINDEST EINER FAHRZEUGKOMPONENTE DES FAHRZEUGS, FAHRZEUGKOMPONENTENEINHEIT MIT EINER SPEICHEREINRICHTUNG UND VERFAHREN ZUM HERSTELLEN EINER FAHRZEUGKOMPONENTENEINHEIT**
METHOD AND CONTROL UNIT FOR STORING ERROR INFORMATION OF A VEHICLE IN AT LEAST ONE VEHICLE COMPONENT OF THE VEHICLE, VEHICLE COMPONENT UNIT HAVING A MEMORY DEVICE, AND METHOD FOR PRODUCING A VEHICLE COMPONENT UNIT
PROCÉDÉ ET CONTRÔLEUR POUR MÉMORISER UNE INFORMATION DE DÉFAUT D'UN VÉHICULE SUR AU MOINS UN COMPOSANT DU VÉHICULE, UNITÉ DE COMPOSANT DE VÉHICULE MUNIE D'UN DISPOSITIF DE MÉMORISATION ET PROCÉDÉ DE FABRICATION D'UNE UNITÉ DE COMPOSANT DE VÉHICULE

(30) Priorität: 21.02.2017 DE 102017202742
(43) Veröffentlichungstag der Anmeldung: 01.01.2020
(73) Patentinhaber: Robert Bosch GmbH, 70442 Stuttgart (DE)
(72) Erfinder: BESSLER, Florian, 70193 Stuttgart (DE); WUEST, Holger, 70563 Stuttgart (DE); BARTEL, Peter, 76344 Eggenstein-Leopoldshafen (DE)
(86) Internationale Anmeldenummer: PCT/EP2018/051265
(87) Internationale Veröffentlichungsnummer: WO 2018/153580

(56) Entgegenhaltungen:
- EP-A1- 0 904 579
- EP-A2- 0 126 402
- EP-A2- 0 503 225
- DE-A1- 4 040 927
- DE-A1- 10 015 646
- DE-A1-102010 049 716
- GB-A- 2 125 577

## Beschreibung

### Stand der Technik

Der Ansatz geht von einer Vorrichtung oder einem Verfahren nach Gattung der unabhängigen Ansprüche aus. Gegenstand des vorliegenden Ansatzes ist auch ein Computerprogramm.

Vor einem Altteilinstandsetzungsprozess von Fahrzeugkomponenten werden die Fahrzeugkomponenten einer Diagnose unterzogen und im Folgenden einem Diagnoseergebnis entsprechend für eine erneute Verwendung wieder instand gesetzt.

Die DE 10 2007 035 351 A1 beschreibt ein Verfahren zur Authentifizierung von Fahrzeugteilen in einem Kraftfahrzeug mittels eines Auslesens und Auswertens von gespeicherten Herstellerinformationen auf RFID-Tags an den Fahrzeugteilen.

Die DE 100 15 646 A1 offenbart eine Vorrichtung zur Benutzerwarnung in einem Kraftfahrzeug, welche eine Fehlererkennung umfasst, die einen fehlerhaften oder kritischen Zustand einer in einem Kraftfahrzeug angeordneten Komponente detektiert.

### Offenbarung der Erfindung

Vor diesem Hintergrund werden mit dem hier vorgestellten Ansatz ein Verfahren zum Speichern einer Fehlerinformation eines Fahrzeugs auf zumindest einer Fahrzeugkomponente des Fahrzeugs, außerdem eine Fahrzeugkomponenteneinheit mit einer Speichereinrichtung und schließlich ein Verfahren zum Herstellen einer Fahrzeugkomponenteneinheit gemäß den Hauptansprüchen vorgestellt. Durch die in den abhängigen Ansprüchen aufgeführten Maßnahmen sind vorteilhafte Weiterbildungen und Verbesserungen des im unabhängigen Anspruch angegebenen Verfahrens möglich.

Die mit dem vorgestellten Ansatz erreichbaren Vorteile bestehen darin, dass ein Altteilinstandsetzungsprozess, insbesondere ein vorgeschalteter Diagnose- oder Prüfprozess von Fahrzeugkomponenten durch ein hier vorgestelltes Verfahren und ein entsprechendes Steuergerät, deutlich vereinfacht und verkürzt werden kann.

Es wird ein Verfahren zum Speichern einer Fehlerinformation eines Fahrzeugs auf zumindest einer Fahrzeugkomponente des Fahrzeugs vorgestellt. Das Verfahren umfasst zumindest einen Schritt des Einlesens und einen Schritt des Bereitstellens. Im Schritt des Einlesens wird ein Fehlersignal eingelesen, das zumindest eine bereitgestellte Fehlerinformation über zumindest eine Fahrzeugkomponente des Fahrzeugs repräsentiert. Im Schritt des Bereitstellens wird unter Verwendung des Fehlersignals ein Speichersignal bereitgestellt, das dazu ausgebildet ist, um die zumindest eine Fehlerinformation auf einer Speichereinrichtung der Fahrzeugkomponente zu speichern. Um eine stromlose Speicherung und Bereitstellung der Fehlerinformation auf der Speichereinrichtung zu ermöglichen, wird im Schritt des Bereitstellens das Speichersignal bereitgestellt, das dazu ausgebildet ist, um die zumindest eine Fehlerinformation auf der zumindest einen als eine RFID-Einrichtung ausgeformten Speichereinrichtung zu speichern. Bei der RFID-Einrichtung kann es sich um einen RFID-Transponder handeln, der sehr klein ausführbar und gut an der Fahrzeugkomponente fixierbar ist.

Dieses Verfahren kann beispielsweise in Software oder Hardware oder in einer Mischform aus Software und Hardware beispielsweise in einem Steuergerät implementiert sein.

Das Fehlersignal kann beispielsweise eine von einem Sensor oder einem Fehlerspeicher des Fahrzeugs bereitgestellte Fehlerinformation repräsentieren.

Ein solches Verfahren dient einem Vereinfachen eines Altteilinstandsetzungsprozesses, da die geprüfte oder zu prüfende Fahrzeugkomponente durch das hier vorgestellte Verfahren zumindest eine gespeicherte Fehlerinformation über die Fahrzeugkomponente oder eine weitere Fahrzeugkomponente bereitstellen kann. Ein Prüfprozess und/oder Altteilinstandsetzungsprozess einzelner Fahrzeugkomponenten kann demnach abhängig von der jeweilig mitgelieferten Fehlerinformation angepasst, beispielsweise verkürzt, werden. Der beschriebene Altteilinstandsetzungsprozess kann auch als Reman-Prozess, von engl. Remanufacturing, bezeichnet werden.

Im Schritt des Bereitstellens kann das Speichersignal bereitgestellt werden, das dazu ausgebildet ist, um die Fehlerinformation auf zumindest einer weiteren Speichereinrichtung zumindest einer weiteren Fahrzeugkomponente zu speichern oder, um die Fehlerinformation auf allen in dem Fahrzeug vorhandenen Speichereinrichtungen von Fahrzeugkomponenten zu speichern. Wenn die Fehlerinformation auf lediglich der betroffenen Fahrzeugkomponente gespeichert wird, kann dies einen individuellen Fehlerspeicher über Fehlerinformationen dieser Fahrzeugkomponente ermöglichen. Wenn die Fehlerinformation auf mehreren oder allen relevanten Fahrzeugkomponenten gespeichert wird, kann jede Fahrzeugkomponente einen umfangreichen Überblick über eine Mehrzahl von Fehlerinformationen mehrerer Fahrzeugkomponenten des Fahrzeugs bereitstellen.

Um diesen umfangreichen Überblick über Fehlerinformationen mehrerer oder aller Fahrzeugkomponenten des Fahrzeugs bereitstellen zu können, kann auch bereits im Schritt des Einlesens das zumindest eine Fehlersignal eingelesen werden, das die Fehlerinformation über die Fahrzeugkomponente und/oder über zumindest eine weitere Fahrzeugkomponente oder über alle Fahrzeugkomponenten des Fahrzeugs repräsentiert.

Im Schritt des Einlesens kann das Fehlersignal eingelesen werden, das als die bereitgestellte Fehlerinformation eine Verschleißinformation und/oder eine Beschädigungsinformation und/oder eine Unfallinformation und/oder eine Reparaturinformation und/oder eine Fehlerspeicherinformation über zumindest die Fahrzeugkomponente umfasst. Informationen dieser Art können wichtige Zustandsinformationen über die Fahrzeugkomponente/n liefern.

Es ist weiterhin von Vorteil, wenn im Schritt des Bereitstellens das Speichersignal bereitgestellt wird, das dazu ausgebildet ist, um die Fehlerinformation zusammen mit einem Zeitstempel auf der zumindest einen Speichereinrichtung zu speichern. Der Zeitstempel kann hierbei beispielsweise einen Zeitpunkt repräsentieren, an dem der Sensor die eingelesene Fehlerinformation sensiert hat. Ein solcher Zeitstempel kann Aufschluss über einen zeitlichen Verlauf von Fehlerinformationen des Fahrzeugs geben. Besonders relevant für den Altteilinstandsetzungsprozess sind beispielsweise Fehlerinformationen kurz vor oder im Moment eines Fahrzeugausfalls.

Ferner wird ein Steuergerät offenbart, das ausgebildet ist, um die Schritte einer Variante eines hier vorgestellten Verfahrens in entsprechenden Einrichtungen durchzuführen, anzusteuern bzw. umzusetzen. Das Steuergerät kann in dem Fahrzeug anordenbar sein. Dabei kann es beispielsweise in ein bereits bestehendes weiteres Steuergerät des Fahrzeugs integrierbar sein. Auch durch diese Ausführungsvariante des Ansatzes in Form eines Steuergeräts kann die dem Ansatz zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Durch das Steuergerät kann eine Steuerung eines Speichersignals erfolgen. Hierzu kann das Steuergerät beispielsweise auf Sensorsignale wie zumindest ein Fehlersignal zugreifen. Die Ansteuerung erfolgt über Aktoren wie eine Einleseeinrichtung und eine Breitstellungseinrichtung.

Unter einem Steuergerät kann vorliegend ein elektrisches Gerät verstanden werden, das Sensorsignale verarbeitet und in Abhängigkeit davon Steuer- und/oder Datensignale ausgibt. Bei den Sensorsignalen kann es sich bspw. Um Signale eines Sensors eines Kraftfahrzeuges bzw. von in einem Kraftfahrzeug verbauten Sensor handeln. Bei den Sensorsignalen kann es sich somit um Signale eines Gassensors, bspw. einer Lambdasonde; eines Drucksensors, welcher bspw. in einer Stoßstange verbaut ist; oder eines Beschleunigungssensors, bspw. eines ESP-Sensors handeln. Bei den Steuer- und/oder Datensignalen kann es sich um Signale handeln, welche an eine Steuereinheit, bspw. ein Brems- oder Motorsteuergerät, gesendet werden. Anhand dieser Signale kann dann die Steuereinheit entscheiden, ob bei einer Fehlfunktion des geprüften Sensors bspw. ein Warnsignal ausgegeben wird und/oder ein Notlaufprogramm aktiviert wird, welches bestimmte Einheiten wie z. B. Bremsaktoren im Kraftfahrzeug ansteuert und/oder bestimmte Einheiten des Kraftfahrzeuges deaktiviert werden, um so einen sicheren Betriebszustand herbeizuführen.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Eine Fahrzeugkomponenteneinheit weist eine der beschriebenen Fahrzeugkomponenten und eine Speichereinrichtung auf, die dazu ausgebildet ist, um zumindest die eine Fehlerinformation zu speichern, die durch das Speichersignal des vorgestellten Steuergeräts bereitgestellt wird.

Eine solche Fahrzeugkomponenteneinheit kann vorteilhafterweise zumindest eine Fehlerinformation speichern und bereitstellen, die für einen Altteilinstandsetzungsprozess der Fahrzeugkomponente hilfreich sein kann. Die Speichereinrichtung der Fahrzeugkomponente ist als eine RFID-Einrichtung ausgeformt. Die Speichereinrichtung kann unlösbar an der Fahrzeugkomponente angebracht sein.

Die Fahrzeugkomponente einer solchen Fahrzeugkomponenteneinheit kann eine E-Maschine, also eine elektrische Maschine wie ein elektrischer Motor, insbesondere ein Traktionsantrieb, sein. Die Fahrzeugkomponente kann aber auch ein Generator und/oder eine Lichtmaschine und/oder eine Batterie und/oder ein Inverter für ein Fahrzeug sein.

Ein Verfahren zum Herstellen einer der vorgestellten Fahrzeugkomponenteneinheiten umfasst zumindest die folgenden Schritte:
Bereitstellen der Fahrzeugkomponente des Fahrzeugs; und
Anbringen der Speichereinrichtung an die Fahrzeugkomponente.

Auch durch ein solches Herstellungsverfahren können die durch den Ansatz bereits vorgestellten Vorteile realisiert werden.

Ausführungsbeispiele des hier vorgestellten Ansatzes sind in den Zeichnungen dargestellt und in der nachfolgenden Beschreibung näher erläutert. Es zeigt:
Fig. 1 ein Blockschaltbild eines Steuergeräts zum Speichern einer Fehlerinformation eines Fahrzeugs auf zumindest einer Fahrzeugkomponente des Fahrzeugs;
Fig. 2 ein Ablaufdiagramm eines Verfahrens zum Speichern einer Fehlerinformation eines Fahrzeugs auf zumindest einer Fahrzeugkomponente des Fahrzeugs gemäß einem Ausführungsbeispiel; und
Fig. 3 ein Ablaufdiagramm eines Verfahrens zum Herstellen einer Fahrzeugkomponenteneinheit gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

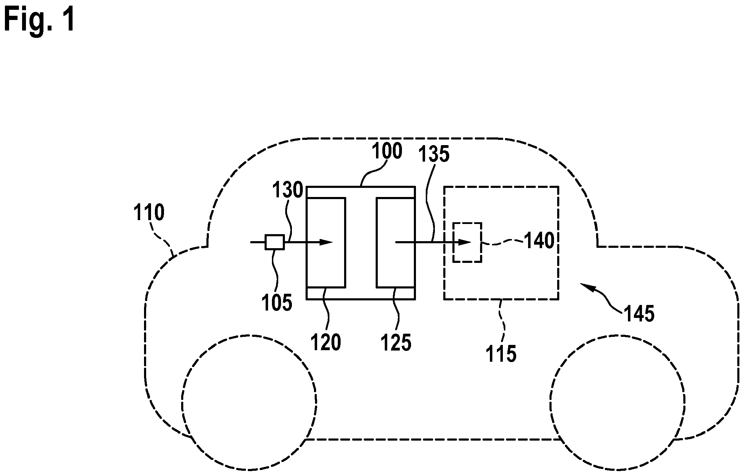

Fig. 1 zeigt ein Blockschaltbild eines Steuergeräts 100 zum Speichern einer Fehlerinformation 105 eines Fahrzeugs 110 auf zumindest einer Fahrzeugkomponente 115 des Fahrzeugs 110.

Das Steuergerät 100 weist eine Einleseeinrichtung 120 und eine Bereitstellungseinrichtung 125 auf. Die Einleseeinrichtung 120 ist dazu ausgebildet, um zumindest ein Fehlersignal 130 einzulesen, das zumindest eine bereitgestellte Fehlerinformation 105 über zumindest eine Fahrzeugkomponente 115 des Fahrzeugs 110 repräsentiert. Hierbei ist die Einleseeinrichtung 120 dazu ausgebildet, um das Fehlersignal 130 einzulesen, bei dem die Fehlerinformation 105 eine Fehlerinformation 105 über die hier dargestellte Fahrzeugkomponente 115 repräsentiert. Alternativ ist die Einleseeinrichtung 120 dazu ausgebildet, um das Fehlersignal 130 einzulesen, bei dem die Fehlerinformation 105 zusätzlich zumindest eine Fehlerinformation über zumindest eine weitere Fahrzeugkomponente des Fahrzeugs 110 repräsentiert.

Die Bereitstellungseinrichtung 125 ist dazu ausgebildet, um unter Verwendung des Fehlersignals 130 ein Speichersignal 135 bereitzustellen, das dazu ausgebildet ist, um die zumindest eine Fehlerinformation 105 auf einer Speichereinrichtung 140 der Fahrzeugkomponente 115 zu speichern. Die Bereitstellungseinrichtung 125 ist ausgebildet, um das Speichersignal 135 über eine geeignete Schnittstelle, beispielsweise drahtlos oder leitungsgebunden, auszugeben.

Hierbei ist das Steuergerät 100 in dem Fahrzeug 110 aufgenommen. Die Fahrzeugkomponente 115 ist Teil einer Fahrzeugkomponenteneinheit 145, welche zumindest die Speichereinrichtung 140 umfasst, welche optional unlösbar an der Fahrzeugkomponente 115 angebracht ist. Hierbei ist die Fahrzeugkomponente 115 eine E-Maschine des als ein Elektrofahrzeug ausgeformten Fahrzeugs 110. Die Speichereinrichtung 140 der E-Maschine ist als ein RFID-Transponder ausgeformt. Die Fehlerinformation 105 umfasst hierbei zumindest eine Verschleißinformation über die E-Maschine und einen Zeitstempel. Das Fehlersignal 130 wird hierbei von einem Sensor des Fahrzeugs 110 bereitgestellt.

Die Speichereinrichtung 140 der Fahrzeugkomponenteneinheit 145 ist dazu ausgebildet, um die durch das Speichersignal 135 des Steuergeräts 100 bereitgestellte Fehlerinformation 105 zu speichern.

Im Folgenden werden Details des Steuergeräts 100 anhand von Beispielen noch einmal genauer beschrieben:
Eine eingesetzte RFID-Technologie, also eine Radio-Frequency-IDentification-Technologie ermöglicht eine Speicherung, Übertragung und ein Auslesen von digital gespeicherten Informationen. Anders als bekannte Steuergeräte, die diese RFID-Technologie einsetzen, um Produktinformationen an Produkten anzubringen und bei Bedarf auszulesen, ermöglicht es das hier vorgestellte Steuergerät 100 im Laufe eines Lebenszyklus einer Fahrzeugkomponente 115 entstehende Fehlerinformationen 105 über zumindest die Fahrzeugkomponente 115 auf der Fahrzeugkomponente 115 selbst zu speichern, um diese Fehlerinformationen 105 zum Auslesen für einen Reman-Prozess bereitzustellen.

Anders ausgedrückt wird beispielsweise unter Verwendung des Steuergeräts 100 ein RFID-Labelling von Komponenten in Form zumindest der Fahrzeugkomponente 115 zur Fehleranalyse für eine vereinfachte Diagnose im Reman-Prozess ermöglicht.

Der durch das Steuergerät 100 beschriebene Ansatz ermöglicht es, Informationen über mögliche Schädigungen, Verschleiß einzelner Komponenten im Fahrzeug 110 und Zusatzinformationen aus dem Fahrzeug 110 bei dessen Lebensende, von einem Fehlerspeicher in Form der Speichereinrichtung 140, auszulesen. Bisher wird RFID zur Speicherung von Informationen über eine Komponente oder ein Produkt bei deren oder dessen Einbau und/oder Verkauf eingesetzt. Der hier beschriebene Ansatz jedoch beschreibt ein System, das die für einen effizienteren und vereinfachten Reman-Prozess benötigten Informationen während eines Betriebs und vor allem auch in einem Moment einer Fahrzeugreparatur auf dem Original-Teil in Form der Fahrzeugkomponente 115 speichert. Diese gespeicherten Fehlerinformationen 105 können dann bei einer Instandsetzung über RFID ausgelesen werden.

Bestandteile des Ansatzes sind demnach eine RFID-Speicherkomponente in Form der Speichereinrichtung 140 auf dem Original-Teil bzw. der Fahrzeugkomponente 115 ohne ein eigenes oder integriertes Steuergerät in Kombination mit dem Steuergerät 100, bzw. einer Steuergerätefunktion im Fahrzeug 110, welche die relevanten Fehlerinformationen 105, die auch als Fehlermeldungen bezeichnet werden können, während des Betriebs zur Speicherung an die Speichereinrichtung 140 sendet. Bei einer Zerlegung des Fahrzeugs 110 nach Lebensende und einer Übergabe der defekten Fahrzeugkomponente 115 in den Reman-Prozess kann über die in der Speichereinrichtung 140 gespeicherten Informationen, der Reman-Prozess effizienter gestaltet werden. Von besonderem Interesse sind dabei Fehlerinformationen 105 von kurz vor und/oder dem Moment des Fahrzeugausfalls des Fahrzeugs 110, bzw. Fehlerinformationen 105, die Sonderereignisse wie Unfälle, z. B. ausgelöste Airbags betreffen. Mit diesen Fehlerinformationen 105 können Diagnoseschritte im Reman-Prozess und Entscheidungen für verschiedene Wiederverwertungsszenarien erleichtert werden.

Es folgen zwei Beispiele, wie zuletzt gespeicherte Fehlerinformationen 105 auf der E-Maschine den Reman-Prozess der E-Maschine beeinflussen können:
In dem ersten Beispiel zeigt eine zeitlich zuletzt gespeicherte Fehlerinformation 105 an, dass ein Airbag des Fahrzeugs 110 ausgelöst wurde. Diese Fehlerinformation 105 legt eine hohe Wahrscheinlichkeit für eine Erschütterung der E-Machine nahe und lässt folgern, dass ein aufwendiger Check nötig ist, da die E-Maschine beschädigt sein kann.

In dem zweiten Beispiel zeigt eine zeitlich zuletzt gespeicherte Fehlerinformation 105 an, dass ein Rückruf wegen eines Katalysator-Problems stattgefunden hat, hierbei ist die E-Maschine nicht betroffen. Es ist demnach ein lediglich kleiner Funktionscheck der E-Maschine ausreichend.

Dieser Ansatz ist auch vor dem Hintergrund einer zunehmenden Elektrifizierung des Fahrzeugs 110 zu sehen. In Zukunft können verschiedene Arten von Sensoren immer genauer anzeigen, was für ein Problem wann an welcher Stelle des Fahrzeugs 110 aufgetreten ist, diese Informationen können vorteilhafterweise durch das Steuergerät 100 in den Fahrzeugkomponenten 110 gespeichert werden.

Der hier vorgestellte Ansatz ist über die oben genannte Kombination einer RFID-Speicherkomponente mit einer entsprechenden Steuergerätefunktion zur Übersendung von Fehlerinformationen 105 an die RFID-Speicherkomponente und zusätzlich über deren Kommunikation miteinander nachweisbar. Weiterhin können gespeicherte Daten über vom Steuergerät 100 übertragene Fehlermeldungen auf der Speichereinrichtung 140 als Nachweis gelten.

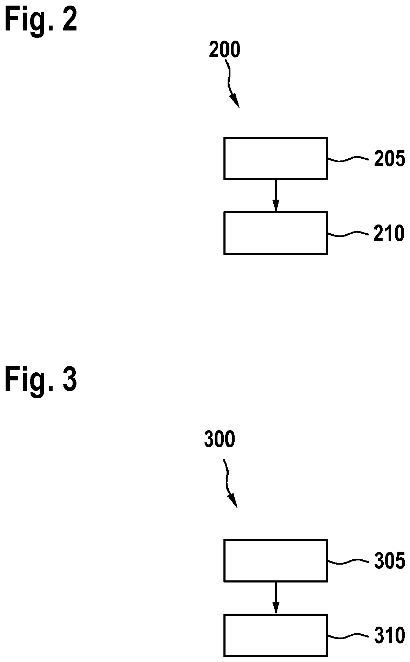

Fig. 2 zeigt ein Ablaufdiagramm eines Verfahrens 200 zum Speichern einer Fehlerinformation eines Fahrzeugs auf zumindest einer Fahrzeugkomponente des Fahrzeugs gemäß einem Ausführungsbeispiel. Dabei kann es sich um ein Verfahren 200 handeln, das von dem in Fig. 1 beschriebenen Steuergerät ausführbar ist.

Das Verfahren 200 umfasst zumindest einen Schritt 205 des Einlesens und einen Schritt 210 des Bereitstellens. Im Schritt 205 des Einlesens wird ein Fehlersignal eingelesen, das zumindest eine bereitgestellte Fehlerinformation über zumindest eine Fahrzeugkomponente des Fahrzeugs repräsentiert. Im Schritt 210 des Bereitstellens wird unter Verwendung des Fehlersignals ein Speichersignal bereitgestellt, das dazu ausgebildet ist, um die zumindest eine Fehlerinformation auf einer Speichereinrichtung der Fahrzeugkomponente zu speichern.

Gemäß diesem Ausführungsbeispiel wird im Schritt 205 des Einlesens das zumindest eine Fehlersignal eingelesen, das die Fehlerinformation über die Fahrzeugkomponente und/oder über zumindest eine weitere Fahrzeugkomponente repräsentiert.

Gemäß diesem Ausführungsbeispiel wird außerdem im Schritt 205 des Einlesens das Fehlersignal eingelesen, das als die bereitgestellte Fehlerinformation eine Verschleißinformation und/oder eine Beschädigungsinformation und/oder eine Unfallinformation und/oder eine Reparaturinformation und/oder eine Fehlerspeicherinformation der Fahrzeugkomponente umfasst.

Im Schritt 210 des Bereitstellens wird gemäß diesem Ausführungsbeispiel das Speichersignal bereitgestellt, das dazu ausgebildet ist, um die zumindest eine Fehlerinformation auf der zumindest einen als eine RFID-Einrichtung ausgeformten Speichereinrichtung zu speichern.

Im Schritt 210 des Bereitstellens wird gemäß diesem Ausführungsbeispiel außerdem das Speichersignal bereitgestellt, das dazu ausgebildet ist, um die Fehlerinformation zusammen mit einem Zeitstempel auf der Speichereinrichtung zu speichern.

Die hier vorgestellten Verfahrensschritte können wiederholt sowie in einer anderen als in der beschriebenen Reihenfolge ausgeführt werden.

Fig. 3 zeigt ein Ablaufdiagramm eines Verfahrens 300 zum Herstellen einer Fahrzeugkomponenteneinheit gemäß einem Ausführungsbeispiel. Dabei kann es sich um ein Verfahren 300 zum Herstellen der in Fig. 1 beschriebenen Fahrzeugkomponenteneinheit handeln.

Das Verfahren 300 weist zumindest einen Schritt 305 des Bereitstellens und einen Schritt 310 des Anbringens auf. Im Schritt 305 des Bereitstellens wird die Fahrzeugkomponente des Fahrzeugs bereitgestellt. Im Schritt 310 des Anbringens wird die Speichereinrichtung an die Fahrzeugkomponente angebracht.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zum Speichern einer Fehlerinformation (105) eines Fahrzeugs (110) auf zumindest einer Fahrzeugkomponente (115) des Fahrzeugs (110), wobei das Verfahren (200) zumindest die folgenden Schritte umfasst:
Einlesen (205) eines Fehlersignals (130), das zumindest eine bereitgestellte Fehlerinformation (105) über zumindest eine Fahrzeugkomponente (115) des Fahrzeugs (110) repräsentiert; und
Bereitstellen (210) eines Speichersignals (135) unter Verwendung des Fehlersignals (130), wobei das Speichersignal (135) dazu ausgebildet ist, um die zumindest eine Fehlerinformation (105) auf einer als eine RFID-Einrichtung ausgeformten Speichereinrichtung (140) der Fahrzeugkomponente (115) zu speichern.

2. Verfahren (200) gemäß Anspruch 1, bei dem im Schritt (205) des Einlesens das zumindest eine Fehlersignal (130) eingelesen wird, das die Fehlerinformation (105) über die Fahrzeugkomponente (115) und über zumindest eine weitere Fahrzeugkomponente repräsentiert.

3. Verfahren (200) gemäß einem der vorangegangenen Ansprüche, bei dem im Schritt (205) des Einlesens das Fehlersignal (130) eingelesen wird, das als die bereitgestellte Fehlerinformation (105) eine Verschleißinformation und/oder eine Beschädigungsinformation und/oder eine Unfallinformation und/oder eine Reparaturinformation und/oder eine Fehlerspeicherinformation der Fahrzeugkomponente (115) umfasst.

4. Verfahren (200) gemäß einem der vorangegangenen Ansprüche, bei dem im Schritt (210) des Bereitstellens das Speichersignal (135) bereitgestellt wird, das dazu ausgebildet ist, um die Fehlerinformation (105) zusammen mit einem Zeitstempel auf der Speichereinrichtung (140) zu speichern.

5. Fahrzeugkomponenteneinheit (145) mit einer Fahrzeugkomponente (115) und einer Speichereinrichtung (140), die dazu ausgebildet ist, um zumindest die eine durch das durch ein Steuergerät (100) bereitgestellte Speichersignal (135) bereitgestellte Fehlerinformation (105) zu speichern, wobei das Steuergerät (100) eingerichtet ist, um Schritte des Verfahrens (200) gemäß einem der vorangegangenen Ansprüche in entsprechenden Einheiten (120; 125) auszuführen und/oder anzusteuern, **dadurch gekennzeichnet, dass** die Speichereinrichtung (140) als eine RFID-Einrichtung ausgeformt ist.

6. Fahrzeugkomponenteneinheit (145) gemäß Anspruch 5, bei der die Speichereinrichtung (140) unlösbar an der Fahrzeugkomponente (115) angebracht ist.

7. Fahrzeugkomponenteneinheit (145) gemäß einem der Ansprüche 5 bis 6, bei der die Fahrzeugkomponente (115) eine E-Maschine, insbesondere ein Traktionsantrieb, ist.

8. Fahrzeugkomponenteneinheit (145) gemäß einem der Ansprüche 5 bis 7, bei dem die Fahrzeugkomponente (115) ein Generator und/oder eine Lichtmaschine und/oder eine Batterie und/oder ein Inverter ist.

9. Verfahren (300) zum Herstellen einer Fahrzeugkomponenteneinheit (145) gemäß einem der Ansprüche 5 bis 8, wobei das Verfahren (300) zumindest die folgenden Schritte umfasst:
Bereitstellen (305) der Fahrzeugkomponente (115) des Fahrzeugs (110); und
Anbringen (310) der Speichereinrichtung (140) an die Fahrzeugkomponente (115).

## Claims

1. Method (200) for storing fault information (105) of a vehicle (110) in at least one vehicle component (115) of the vehicle (110), wherein the method (200) comprises at least the following steps:
reading in (205) a fault signal (130) which represents at least one provided fault information item (105) about at least one vehicle component (115) of the vehicle (110); and
providing (210) a memory signal (135) using the fault signal (130), wherein the memory signal (135) is designed to store the at least one fault information item (105) in a memory device (140), constructed as an RFID device, of the vehicle component (115).

2. Method (200) according to Claim 1, in which in the reading-in step (205) the at least one fault signal (130), which represents the fault information (105) about the vehicle component (115) and about at least one further vehicle component, is read in.

3. Method (200) according to one of the preceding claims, in which in the reading-in step (205) the fault signal (130), which comprises, as the provided fault information (105), wear information and/or damage information and/or accident information and/or repair information and/or fault memory information of the vehicle component (115), is read in.

4. Method (200) according to one of the preceding claims, in which in the providing step (210) the memory signal (135), which is designed to store the fault information (105) together with a time stamp in the memory device (140), is provided.

5. Vehicle component unit (145) having a vehicle component (115) and a memory device (140) which is designed to store at least the one fault information item (105) provided by the memory signal (135) which is provided by a control device (100), wherein the control device (100) is configured to execute and/or actuate steps of the method (200) according to one of the preceding claims in corresponding units (120; 125), **characterized in that** the memory device (140) is constructed as an RFID device.

6. Vehicle component unit (145) according to Claim 5, in which the memory device (140) is non-detachably fastened to the vehicle component (115).

7. Vehicle component unit (145) according to one of Claims 5 to 6, in which the vehicle component (115) is an E-machine, in particular a traction drive.

8. Vehicle component unit (145) according to one of Claims 5 to 7, in which the vehicle component (115) is a generator and/or a dynamo and/or a battery and/or an inverter.

9. Method (300) for producing a vehicle component unit (145) according to one of Claims 5 to 8, wherein the method (300) comprises at least the following steps:
providing (305) the vehicle component (115) of the vehicle (110); and
fastening (310) the memory device (140) to the vehicle component (115).

## Revendications

1. Procédé (200) de mémorisation d'une information d'erreur (105) d'un véhicule (110) relative à au moins un composant (115) du véhicule (110), le procédé (200) comprenant au moins les étapes suivantes :
lire (205) un signal d'erreur (130) qui représente au moins une information d'erreur fournie (105) concernant au moins un composant (115) du véhicule (110) ; et
fournir (210) un signal de mémorisation (135) à l'aide du signal d'erreur (130), le signal de mémorisation (135) étant conçu pour mémoriser l'au moins une information d'erreur (105) sur un dispositif de mémorisation (140) du composant de véhicule (115) se présentant sous la forme d'un dispositif RFID.

2. Procédé (200) selon la revendication 1, dans lequel l'au moins un signal d'erreur (130), qui représente l'information d'erreur (105) relative au composant de véhicule (115) et à au moins un autre composant de véhicule, est lu à l'étape (205) de lecture.

3. Procédé (200) selon l'une des revendications précédentes, dans lequel le signal d'erreur (130), qui comprend comme information d'erreur fournie (105) une information d'usure et/ou une information d'endommagement et/ou une information d'accident et/ou une information de réparation et/ou une information de mémoire d'erreur du composant de véhicule (115), est lu à l'étape (205) de lecture.

4. Procédé (200) selon l'une des revendications précédentes, dans lequel le signal de mémorisation (135), qui est conçu pour mémoriser l'information d'erreur (105) conjointement avec un horodatage sur le moyen de mémorisation (140), est fourni à l'étape (210) de fourniture.

5. Unité de composant de véhicule (145) comprenant un composant de véhicule (115) et un dispositif de mémorisation (140) qui est conçu pour mémoriser au moins une information d'erreur (105) fournie par le signal de mémorisation (135) fourni par une unité de commande (100), l'unité de commande (100) étant conçue pour exécuter et/ou commander des étapes du procédé (200) selon l'une des revendications précédentes dans des unités correspondantes (120 ; 125), **caractérisé en ce que** le dispositif de mémorisation (140) est conçu sous la formé d'un dispositif RFID.

6. Unité de composant de véhicule (145) selon la revendication 5, dans laquelle le dispositif de mémorisation (140) est fixé de manière inamovible au composant de véhicule (115).

7. Unité de composant de véhicule (145) selon l'une des revendications 5 à 6, dans laquelle le composant de véhicule (115) est une machine électrique, notamment un entraînement de traction.

8. Unité de composant de véhicule (145) selon l'une des revendications 5 à 7, dans laquelle le composant de véhicule (115) est un générateur et/ou une dynamo et/ou une batterie et/ou un onduleur.

9. Procédé (300) de fabrication d'une unité de composant de véhicule (145) selon l'une des revendications 5 à 8, le procédé (300) comprenant au moins les étapes suivantes :
fournir (305) le composant (115) du véhicule (110) ; et
fixer (310) le dispositif de mémorisation (140) au composant de véhicule (115).
